# EUROPEAN PATENT APPLICATION

(11) **EP 3 223 228 A1**
(43) Date of publication of application: **27.09.2017**
(21) Application number: 16189947.1
(22) Date of filing: 21.09.2016
(51) Int. Cl.: G06Q 50/00, G06Q 50/18

(54) **SYSTEMS AND METHODS FOR IDENTIFYING MATCHING CONTENT IN A SOCIAL NETWORK**

(30) Priority: 21.03.2016 US 201615076524; 22.03.2016 WO PCT/US2016/023638
(71) Applicant: Facebook Inc., Menlo Park, California 94025 (US)
(72) Inventor: KERETH, Lior Ben, Menlo Park, CA California 94025 (US)
(74) Representative: Schröer, Gernot H.

(57) **Abstract**

Systems, methods, and non-transitory computer-readable media can determine that a first content item was provided for publication through the social networking system. At least some portions of the first content item that match content included in a second content item are determined, the second content item being accessible through the social networking system. A determination is made that the portions of the first content item include at least some copyrighted content from the second content item. At least one notification is provided to a publisher of the second content item, wherein the notification indicates a potential copyright violation by a publisher of the first content item, and wherein the notification identifies at least some portions of the first content item that match copyrighted content in the second content item.

## Description

### FIELD OF THE INVENTION

The present technology relates to the field of content matching. More particularly, the present technology relates to techniques for identifying matching content items.

### BACKGROUND

Today, people often utilize computing devices (or systems) for a wide variety of purposes. Users can use their computing devices to, for example, interact with one another, access content, share content, and create content. In some cases, content items can include postings from members of a social network. The postings may include text and media content items, such as images, videos, and audio. The postings may be published to the social network for consumption by others.

### SUMMARY

Various embodiments of the present disclosure can include systems, methods, and non-transitory computer readable media configured to determine that a first content item was provided for publication through the social networking system. At least some portions of the first content item that match content included in a second content item are determined, the second content item being accessible through the social networking system. A determination is made that the portions of the first content item include at least some copyrighted content from the second content item. At least one notification is provided to a publisher of the second content item, wherein the notification indicates a potential copyright violation by a publisher of the first content item, and wherein the notification identifies at least some portions of the first content item that match copyrighted content in the second content item.

In an embodiment, the systems, methods, and non-transitory computer readable media are configured to determine a set of candidate content items that each include at least one frame that matches a frame in the first content item, the set of candidate content items including the second content item and determine at least one contiguous sequence of frames in the first content item that match a contiguous sequence of frames in the second content item.

In an embodiment, the systems, methods, and non-transitory computer readable media are configured to determine a fingerprint for a frame in the first content item, determine one or more fingerprints that are associated with the fingerprint for the frame based at least in part on a search index that identifies, for a given frame, one or more frames in other content items that match the given frame, wherein each fingerprint in the search index references at least one content item that is available through the social networking system, and determine the set of candidate content items based at least in part on the content items that are referenced by the one or more fingerprints.

In an embodiment, the systems, methods, and non-transitory computer readable media are configured to determine that at least one first frame in the first content item matches at least one first frame in the second content item and determine that at least one second frame in the first content item matches at least one second frame in the second content item, wherein the first frame in the first content item is adjacent to the second frame in the first content item, and wherein the first frame in the second content item is adjacent to the second frame in the second content item.

In an embodiment, the systems, methods, and non-transitory computer readable media are configured to determine that a Hamming distance between a fingerprint of the first frame in the first content item and a fingerprint of the first frame in the second content item satisfies a threshold.

In an embodiment, the systems, methods, and non-transitory computer readable media are configured to determine a ranking of the set of candidate content items, the ranking being based at least in part on a number of frames in at least a segment of a candidate content item that match frames in the first content item and remove candidate content items in the set of candidate content items that do not match at least a threshold number of frames in the first content item.

In an embodiment, the systems, methods, and non-transitory computer readable media are configured to determine that a publisher of the second content item has identified one or more portions of the second content item as copyrighted content.

In an embodiment, the systems, methods, and non-transitory computer readable media are configured to provide an interface for viewing at least the first content item and the second content item.

In an embodiment, the interface includes at least one option to playback respective portions of both the first content item and the second content item that were determined to match, wherein the playback of the respective portions is performed synchronously.

In an embodiment, the interface provides information indicating a total amount of playback time of the first content item that includes content that matches content from the second content item.

In an embodiment, one or more computer-readable non-transitory storage media embody software that is operable when executed to perform a method according to the invention or any of the above mentioned embodiments.

In an embodiment, a system comprises: one or more processors; and at least one memory coupled to the processors and comprising instructions executable by the processors, the processors operable when executing the instructions to perform a method according to the invention or any of the above mentioned embodiments.

In an embodiment, a computer program product, preferably comprising a computer-readable non-transitory storage media, is operable when executed on a data processing system to perform a method according to the invention or any of the above mentioned embodiments.

It should be appreciated that many other features, applications, embodiments, and/or variations of the disclosed technology will be apparent from the accompanying drawings and from the following detailed description. Additional and/or alternative implementations of the structures, systems, non-transitory computer readable media, and methods described herein can be employed without departing from the principles of the disclosed technology.

Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

- FIGURE 1: illustrates an example system including an example content provider module configured to provide access to various content items, according to an embodiment of the present disclosure.
- FIGURE 2: illustrates an example of a content matching module, according to an embodiment of the present disclosure.
- FIGURE 3: illustrates an example diagram of an interface, according to an embodiment of the present disclosure.
- FIGURE 4: illustrates an example process for submitting content items for publication to a social networking system, according to various embodiments of the present disclosure.
- FIGURE 5: illustrates an example process for determining matches between content items, according to various embodiments of the present disclosure.
- FIGURE 6: illustrates a network diagram of an example system including an example social networking system that can be utilized in various scenarios, according to an embodiment of the present disclosure.
- FIGURE 7: illustrates an example of a computer system or computing device that can be utilized in various scenarios, according to an embodiment of the present disclosure.

The figures depict various embodiments of the disclosed technology for purposes of illustration only, wherein the figures use like reference numerals to identify like elements. One skilled in the art will readily recognize from the following discussion that alternative embodiments of the structures and methods illustrated in the figures can be employed without departing from the principles of the disclosed technology described herein.

### DETAILED DESCRIPTION

### APPROACHES FOR IDENTIFYING MATCHING CONTENT

Today, people often utilize computing devices (or systems) for a wide variety of purposes. Users can use their computing devices to, for example, interact with one another, access content, share content, and create content. In some cases, content items can include postings from members of a social network. The postings may include text and media content items, such as images, videos, and audio. The postings may be published to the social network for consumption by others.

Under conventional approaches, users may post various content items to a social networking system. In some instances, such content items, e.g., videos, may include content that is copied, or reproduced, from copyrighted content items that are published through the social networking system. For example, a video that is uploaded to the social networking system may be a duplicate of a copyrighted video. In this example, the uploaded video can be flagged and appropriate action may be taken. In some instances, only a portion of an uploaded video may include content that has been duplicated from a copyrighted video. For example, the uploaded video may be a video of a movie critic that includes portions of movie trailers. Under conventional approaches, the entire uploaded video may be flagged as a copyright violation and the copyright owner of the duplicated portion of the video may need to review the entire video to determine whether a copyright violation has occurred. Accordingly, such conventional approaches may not be effective in addressing these and other problems arising in computer technology.

An improved approach rooted in computer technology overcomes the foregoing and other disadvantages associated with conventional approaches specifically arising in the realm of computer technology. In various embodiments, content items uploaded to a social networking system are fingerprinted and stored. The social networking system can determine whether any other content items that are published through the social networking system match the uploaded content item either in whole or in part. Any portions of the uploaded content item that match a published content item may be copyright violations. In various embodiments, the social networking system can identify the respective portions of the uploaded content item that match any published and/or copyrighted content items. The publishers (e.g., copyright holders) of these content items can be notified about the possible copyright violations. In some embodiments, such publishers can access an interface that identifies the portions of the uploaded video that match the publisher's content item. The publisher can access the interface to playback the portions of the uploaded video that were identified as possible violations of the publisher's copyrights. The publisher can also access the interface to flag the uploaded video as a copyright violation, take no action (e.g., due to fair use of the content item), or to grant authorization for use of the copyrighted portions, for example.

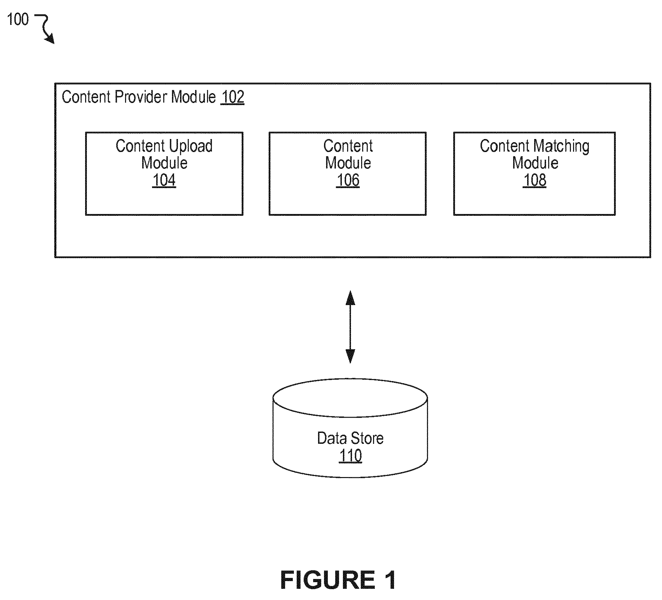

FIGURE 1 illustrates an example system 100 including an example content provider module 102 configured to provide access to various content items, according to an embodiment of the present disclosure. As shown in the example of FIGURE 1, the content provider module 102 can include a content upload module 104, a content module 106, and a content matching module 108. In some instances, the example system 100 can include at least one data store 110. The components (e.g., modules, elements, etc.) shown in this figure and all figures herein are exemplary only, and other implementations may include additional, fewer, integrated, or different components. Some components may not be shown so as not to obscure relevant details.

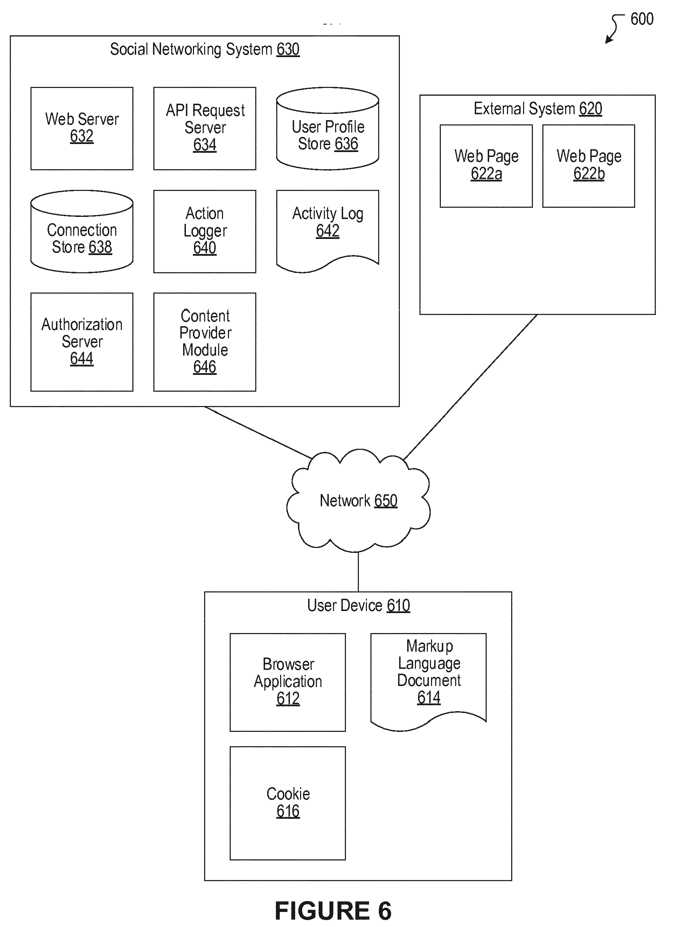

In some embodiments, the content provider module 102 can be implemented, in part or in whole, as software, hardware, or any combination thereof. In general, a module as discussed herein can be associated with software, hardware, or any combination thereof. In some implementations, one or more functions, tasks, and/or operations of modules can be carried out or performed by software routines, software processes, hardware, and/or any combination thereof. In some cases, the content provider module 102 can be implemented, in part or in whole, as software running on one or more computing devices or systems, such as on a user or client computing device. In one example, the content provider module 102 or at least a portion thereof can be implemented as or within an application (e.g., app), a program, or an applet, etc., running on a user computing device or a client computing system, such as the user device 610 of FIGURE 6. In another example, the content provider module 102 or at least a portion thereof can be implemented using one or more computing devices or systems that include one or more servers, such as network servers or cloud servers. In some instances, the content provider module 102 can, in part or in whole, be implemented within or configured to operate in conjunction with a social networking system (or service), such as the social networking system 630 of FIGURE 6.

The content provider module 102 can be configured to communicate and/or operate with the at least one data store 110, as shown in the example system 100. The at least one data store 110 can be configured to store and maintain various types of data. For example, the data store 110 can store information describing various content items that have been posted by users of a social networking system including, for example, fingerprints (e.g., hash codes) corresponding to such content items. In some implementations, the at least one data store 110 can store information associated with the social networking system (e.g., the social networking system 630 of FIGURE 6). The information associated with the social networking system can include data about users, social connections, social interactions, locations, geo-fenced areas, maps, places, events, pages, groups, posts, communications, content, feeds, account settings, privacy settings, a social graph, and various other types of data. In some implementations, the at least one data store 110 can store information associated with users, such as user identifiers, user information, profile information, user specified settings, content produced or posted by users, and various other types of user data.

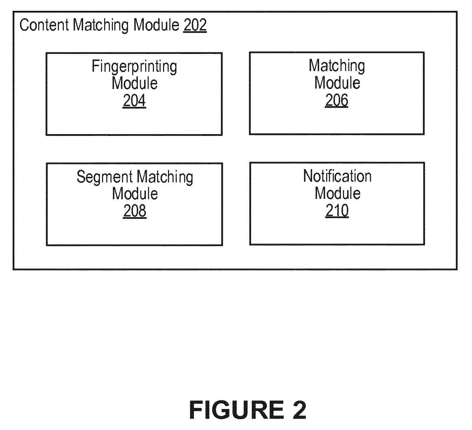

The content provider module 102 can be configured to provide users with access to content items that are posted through a social networking system. For example, a user can interact with an interface that is provided by a software application (e.g., a social networking application) running on a computing device of the user. This interface can include an option for posting, or uploading, content items to the social networking system. When posting a content item, the content upload module 104 can be utilized to communicate data describing the content item from the computing device to the social networking system. Such content items may include text, images, audio, and videos, for example. The social networking system can then post the content item through the social networking system including, for example, in one or more news feeds. The interface provided by the software application can also be used to access posted content items, for example, using the content module 106. For example, the content module 106 can include posted content items in a user's news feed. In this example, the user can access the posted content items while browsing the news feed. In another example, the user can access the posted content item by searching, through the interface, for the content item, for the user that posted the content item, and/or using search terms that correspond to the content item. The content matching module 108 can be configured to identify matching content items that have been, or are in the process of, being posted to the social networking system. More details regarding the content matching module 108 will be provided below with reference to FIGURE 2.

FIGURE 2 illustrates an example of a content matching module 202, according to an embodiment of the present disclosure. In some embodiments, the content matching module 108 of FIGURE 1 can be implemented as the content matching module 202. As shown in FIGURE 2, the content matching module 202 can include a fingerprinting module 204, a matching module 206, a segment matching module 208, and a notification module 210.

In various embodiments, the fingerprinting module 204 is configured to determine respective fingerprints for content items. For example, a fingerprint for a content item may be determined when the content item is initially uploaded to the social networking system. In some embodiments, the fingerprinting module 204 can also obtain fingerprints for content items from one or more fingerprinting services that are each configured to determine fingerprints for the content items using one or more techniques, as described below. In some instances, the user or entity uploading a content item may select an option to indicate that the content item is being uploaded to protect copyrighted content without necessarily posting the content item to the social networking system.

In some embodiments, the fingerprinting module 204 is configured to determine a fingerprint for some, or all, of the frames (or images) of a content item. In one example, the fingerprinting module 204 can determine a respective fingerprint for each frame in the content item. In another example, the fingerprinting module 204 can determine respective fingerprints for frames at a specified rate (e.g., one frame per second). When determining fingerprints, the fingerprinting module 204 can utilize a model, or classifier, that has been trained to generate a respective fingerprint based on the content, or subject matter, captured by a frame. In some embodiments, the fingerprint is a similarity-preserving hash code that provides a compact representation of the frame. The classifier can be based on any machine learning technique, including, but not limited to, a deep convolutional neural network. In such embodiments, a match between a frame from a first content item and a frame from a second content item can be determined by comparing the respective fingerprints of the two frames. In some embodiments, the comparison can be performed by computing a Hamming distance between the fingerprint of the frame from the first content item and the fingerprint of the frame from the second content item. Frames that are similar can be identified when a threshold Hamming distance is satisfied. The fingerprints determined for content items can be stored, for example, in the data store 110 of FIGURE 1, and retrieved for purposes of identifying similar content items.

In various embodiments, the matching module 206 is configured to determine a measure of relatedness between content items. In one example, such measurement can be provided in the form of a score. For example, in some embodiments, the matching module 206 can determine, for an uploaded content item, a set of content items that each include at least one frame that matches a frame in the uploaded content item. In some embodiments, the set of content items may be determined using a search index that identifies, for a given frame in a content item, one or more frames in other content items that match the given frame.

In some embodiments, the matching module 206 can rank content items in the set of content items based on how closely a content item matches the uploaded content item. This ranking may be done, for example, based on the number of matching frames between a content item and the uploaded content item. In some embodiments, when ranking the content items, the matching module 206 determines the number of frames included in at least one segment (e.g., portion of frames) of the uploaded content item that match frames in the content items included in the set of content items. The segment may be of a certain length (e.g., based on a number of frames or a period of time). For example, the matching module 206 can determine that of the frames included in a 20 second segment (at one frame per second) of the uploaded content item, 8 of those frames matched frames in a first content item in the set and 15 of those frames matched frames in a second content item in the set. Each content item included in the set of content items can be assigned a respective score based on the number of matching frames in the content item. In this example, the score assigned to the first content item can be 8, since the first content item includes 8 matching frames out of 20 frames being evaluated. Moreover, the score assigned to the second content item can be 15, since the second content item includes 15 matching frames out of the 20 frames being evaluated. Such scores can be used to rank the set of content items. The frames matched in the first content item and the second content item may be contiguous or non-contiguous. Content items in the set that are assigned at least a threshold score (e.g., at least 6 matching frames) can be identified as candidate content items. The segment matching module 208 can be used to perform post-processing on the candidate content items to determine at least some portions of the uploaded content item include content that is also in the candidate content items.

In some embodiments, the segments used to score content items in the set of content items may be obtained from other fingerprinting services. For example, in some embodiments, an audio fingerprinting service may be used to determine one or more audio fingerprints for the uploaded content item or for portions of the uploaded content item. In general, the audio fingerprint can be determined based on one or more audio signals that correspond to the content item while taking into account any perceptual characteristics of the audio signal(s). One example approach for generating audio fingerprints is based on discrete cosine transform (DCT) as described in U.S. Application No. 14/153,404, filed on January 13, 2014, and entitled "Detecting distorted audio signals based on audio fingerprinting," which is incorporated by reference herein in its entirety. In such embodiments, the matching module 206 can obtain, from the audio fingerprinting service, at least one segment of the uploaded content item that includes audio content that matches audio content in one or more content items of the set of content items. Such segments can be used to rank the set of content items and to determine the candidate content items, as described above. Similarly, in some embodiments, a video fingerprinting service may be used to determine one or more video fingerprints for the uploaded content item or for portions of the uploaded content item (e.g., for each frame or a set of frames of the content item). In one example, a video fingerprint for the uploaded content item can be determined based on one or more video signals that correspond to the content item. The video fingerprint can be determined by analyzing visual features in the content item including, for example, key frame analysis, color, changes in the video across frames, and motion changes (e.g., optical flow) during video sequences. In such embodiments, the matching module 206 can obtain, from the video fingerprinting service, at least one segment of the uploaded content item that includes content (e.g., video or motion) that matches content in one or more content items of the set of content items. Such segments can be used to rank the set of content items and to determine the candidate content items, as described above.

As mentioned, content items in the set that are assigned at least a threshold score (e.g., at least 6 matching frames) can be identified as candidate content items. The segment matching module 208 can be used to perform post-processing on the candidate content items to determine at least some portions (or all) of the uploaded content item including content that is also in the candidate content items. In some embodiments, the segment matching module 208 determines the portions by obtaining the respective fingerprints for each frame in the uploaded content item and respective fingerprints for each frame in a candidate content item. In such embodiments, the segment matching module 208 uses the respective fingerprints to perform a frame-by-frame comparison of the uploaded content item and the candidate content item to determine one or more longest sequences of matching frames. Each sequence can be associated with a start time at which the matching frames begin and an end time at which the matching frames end. As described above, such comparison may be done by determining whether the Hamming distance between the fingerprints of two frames satisfies a threshold. For example, the segment matching module 208 may determine that frames 1 to 50 of the uploaded content item match frames 50 to 100 of a candidate content item. In some instances, there may be a number of frames between two or more sequences of matching frames that do not match. In such instances, the segment matching module 208 can apply a smoothing technique so that the two or more sequences of matching frames are displayed in an interface as a contiguous sequence of matching frames. For example, the segment matching module 208 may determine that frames 1 to 50 and 55 to 100 of the uploaded content item match frames 50 to 100 and 105 to 150 of a candidate content item, respectively. In this example, the segment matching module 208 can apply a smoothing technique so that all of the frames 1 to 100 of the uploaded content item are displayed in an interface as a contiguous sequence of frames that match frames 50 to 150 of the candidate content item.

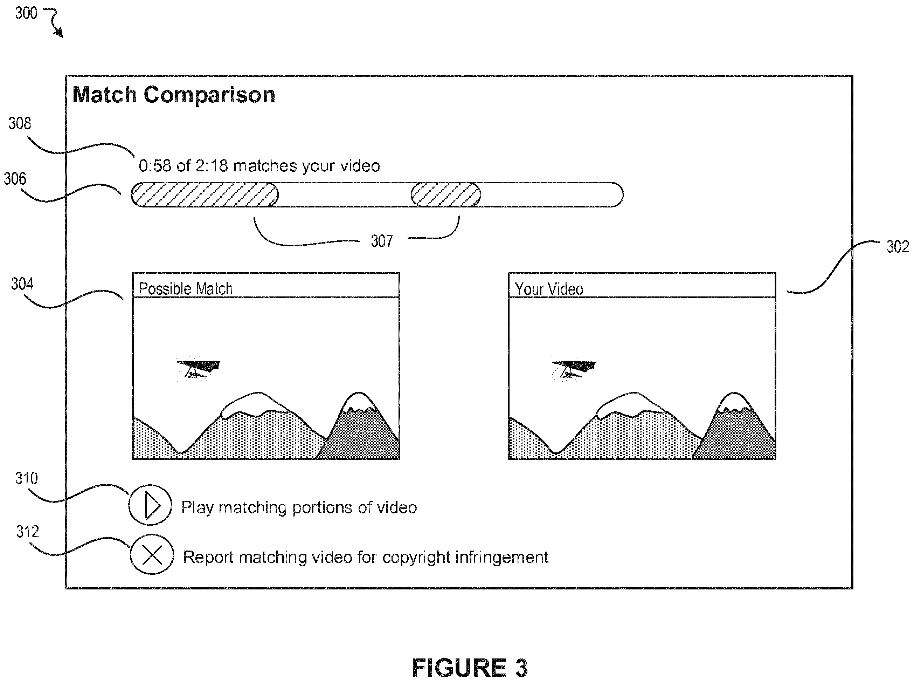

Once all of the sequences of matching frames have been determined for each candidate content item, the notification module 210 can notify publishers of a potential copyright infringement. For example, the notification module 210 can determine that the uploaded content item is copyrighted content and that portions of a first candidate content item and portions of a second candidate content item match content in the uploaded content item. In this example, the notification module 210 can notify the publisher of the uploaded content item of the potential copyright violations by the publisher of the first candidate content item and the publisher of the second candidate content item. In another example, the notification module 210 may determine that the uploaded content item matches content in a first candidate content item and that the first candidate content item has been identified as copyrighted content by its publisher. In this example, the notification module 210 can notify the publisher of the first candidate content item of the potential copyright infringement by the publisher of the uploaded content item. In some embodiments, the notified publishers can access an interface provided by the notification module 210 that identifies the respective portions of the content items at which a potential copyright infringement was determined, as illustrated in the example of FIGURE 3. The publisher can access the interface to playback the matching portions of the content items. The publisher can also access the interface to flag certain content items as a copyright violations, take no action (e.g., due to fair use of the content item), or to grant authorization for use of the copyrighted portions, for example.

FIGURE 3 illustrates an example diagram of an interface 300, according to an embodiment of the present disclosure. As mentioned, publishers of content items can be notified when their copyrighted content is potentially being infringed. In some embodiments, such publishers are able to access the interface 300, for example, through a software application (e.g., social networking application and/or web browser) running on a computing device.

The interface 300 can provide access to the publisher's copyrighted content item 302 and any content items 304 that may potentially be infringing on the publisher's copyright. The publisher can replay any portions of the content items 302, 304 through the interface 300. The interface 300 also includes visual information 306 that indicates what portions of the content item 304 match the publisher's content item 302. For example, the visual information 306 may be represented in the form of a video playback status bar 306 that indicates what portions 307 of the content item 304 match the publisher's content item 302. Such portions 307 may be indicated, for example, using a different shading or color than the non-matching portions in the status bar 306. In some embodiments, the length of the status bar 306 corresponds to the length of the potentially infringing content item 304. The interface 300 can also provide information 308 that indicates what amount of the content item 304 matches the publisher's content item 302 (e.g., "0:58 of 2:18 matches your video"). In various embodiments, the publisher can select an option 310 through the interface 300 to playback the respective portions of both the publisher's content item 302 and the content item 304 that were determined to match. The playback of the respective portions can be performed through the interface 300 and may be performed synchronously. Upon viewing the playback, the publisher may select an option 312 to report the matching content item 304 for copyright infringement. Once reported, the content item 304 may be removed from the social networking system (or access to the content item 304 may be prevented). Further, the publisher of the content item 304 may be notified of the copyright violation. In some embodiments, a publisher that is reported for a threshold number of copyright violations is prevented from accessing the social networking system and/or prevented from posting content items to the social networking system. In some embodiments, the publisher may be able to select options to take no action against the content item 304 (e.g., due to fair use) or to grant authorization for use of the copyrighted portions, for example.

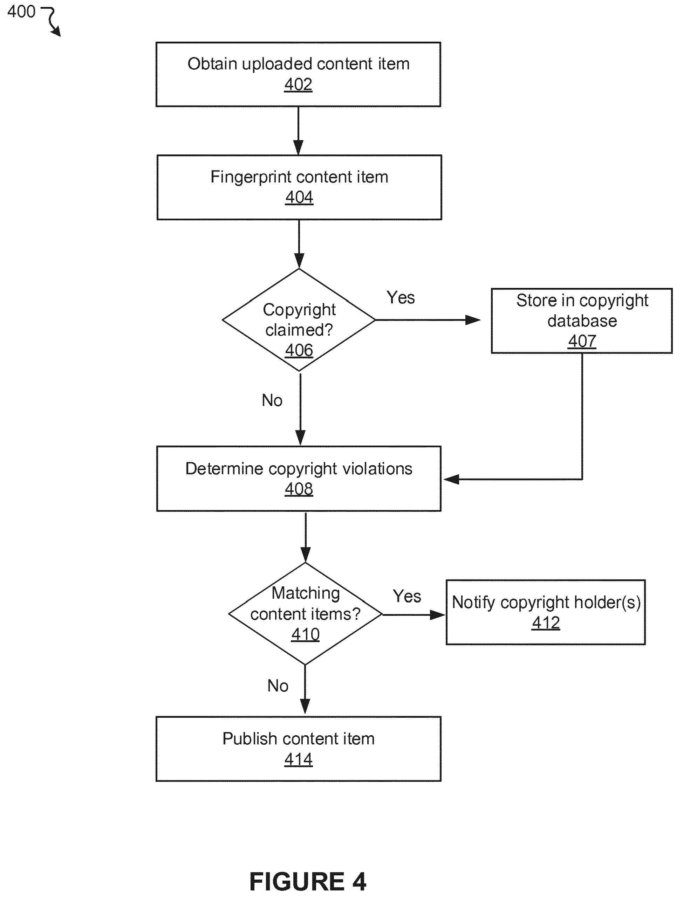

FIGURE 4 illustrates an example process 400 for submitting content items for publication to a social networking system, according to various embodiments of the present disclosure. It should be appreciated that there can be additional, fewer, or alternative steps performed in similar or alternative orders, or in parallel, within the scope of the various embodiments discussed herein unless otherwise stated.

At block 402, a content item is uploaded to the social networking system. At block 404, the uploaded content item is fingerprinted using one or more fingerprinting techniques and/or services. At block 406, a determination is made whether the user or entity that uploaded the content item has identified the content item as being copyrighted. If the content item was identified as being copyrighted, then, at block 407, information describing the content item is stored in a copyright database. This copyright database can be referenced when determining whether copyright violations occurred between matching content items. At block 408, a determination is made whether any potential copyright violations exist between the uploaded content item and any other content items that are available through the social networking system. At block 410, a determination is made whether any content items available through the social networking system match the uploaded content item. If matches are determined, as described above, then, at block 412, the respective publishers (or copyright holders) of the appropriate content items are notified. In some instances, the uploaded content item may not be published publically. For example, the uploaded content item may be posted privately to a news feed or to one or more users of the social networking system. In such instances, the social networking system can send a message to the publisher of the uploaded content item to warn the publisher of the unauthorized use of copyrighted content. The message can further ask the publisher to remove the uploaded content item or seek approval of the use by the copyright holder. If the publisher agrees to seek approval, the user of the social networking system that holds the copyright for the content item (or portions of the content item) is notified and is able to view the uploaded content item. In some instances, the publisher of the uploaded content item is anonymized so the copyright holder is shown only the uploaded content item without any information that may identify the publisher. The copyright holder then has the option to approve the posting of the uploaded content item or to have the content item removed from the social networking system. At block 414, if no matches are determined, then the uploaded content item is permitted to be published, or posted, through the social networking system.

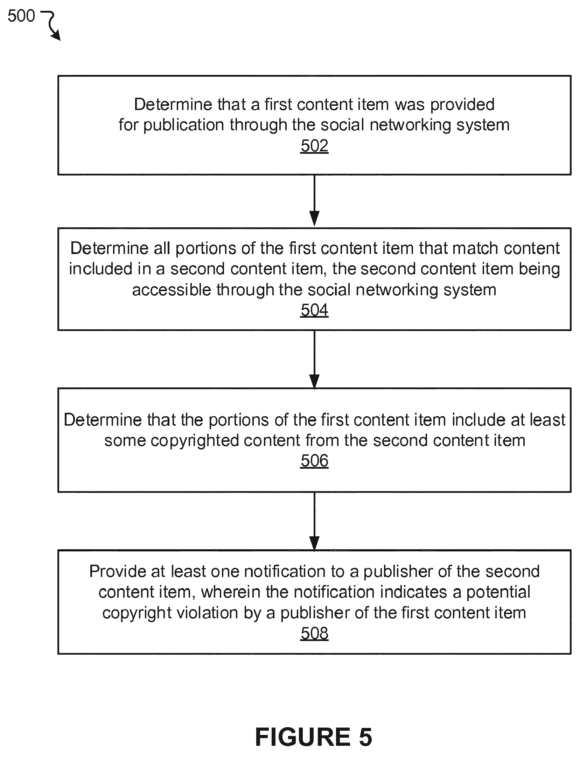

FIGURE 5 illustrates an example process 500 for determining matches between content items, according to various embodiments of the present disclosure. It should be appreciated that there can be additional, fewer, or alternative steps performed in similar or alternative orders, or in parallel, within the scope of the various embodiments discussed herein unless otherwise stated.

At block 502, a determination is made that a first content item was provided for publication through the social networking system. At block 504, at least some portions of the first content item that match content included in a second content item are determined, the second content item being accessible through the social networking system. At block 506, a determination is made that the portions of the first content item include at least some copyrighted content from the second content item. At block 508, at least one notification is provided to a publisher of the second content item, wherein the notification indicates a potential copyright violation by a publisher of the first content item, and wherein the notification identifies at least some portions of the first content item that match copyrighted content in the second content item.

It is contemplated that there can be many other uses, applications, and/or variations associated with the various embodiments of the present disclosure. For example, in some cases, user can choose whether or not to opt-in to utilize the disclosed technology. The disclosed technology can also ensure that various privacy settings and preferences are maintained and can prevent private information from being divulged. In another example, various embodiments of the present disclosure can learn, improve, and/or be refined over time.

### SOCIAL NETWORKING SYSTEM - EXAMPLE IMPLEMENTATION

FIGURE 6 illustrates a network diagram of an example system 600 that can be utilized in various scenarios, in accordance with an embodiment of the present disclosure. The system 600 includes one or more user devices 610, one or more external systems 620, a social networking system (or service) 630, and a network 650. In an embodiment, the social networking service, provider, and/or system discussed in connection with the embodiments described above may be implemented as the social networking system 630. For purposes of illustration, the embodiment of the system 600, shown by FIGURE 6, includes a single external system 620 and a single user device 610. However, in other embodiments, the system 600 may include more user devices 610 and/or more external systems 620. In certain embodiments, the social networking system 630 is operated by a social network provider, whereas the external systems 620 are separate from the social networking system 630 in that they may be operated by different entities. In various embodiments, however, the social networking system 630 and the external systems 620 operate in conjunction to provide social networking services to users (or members) of the social networking system 630. In this sense, the social networking system 630 provides a platform or backbone, which other systems, such as external systems 620, may use to provide social networking services and functionalities to users across the Internet.

The user device 610 comprises one or more computing devices (or systems) that can receive input from a user and transmit and receive data via the network 650. In one embodiment, the user device 610 is a conventional computer system executing, for example, a Microsoft Windows compatible operating system (OS), Apple OS X, and/or a Linux distribution. In another embodiment, the user device 610 can be a computing device or a device having computer functionality, such as a smart-phone, a tablet, a personal digital assistant (PDA), a mobile telephone, a laptop computer, a wearable device (e.g., a pair of glasses, a watch, a bracelet, etc.), a camera, an appliance, etc. The user device 610 is configured to communicate via the network 650. The user device 610 can execute an application, for example, a browser application that allows a user of the user device 610 to interact with the social networking system 630. In another embodiment, the user device 610 interacts with the social networking system 630 through an application programming interface (API) provided by the native operating system of the user device 610, such as iOS and ANDROID. The user device 610 is configured to communicate with the external system 620 and the social networking system 630 via the network 650, which may comprise any combination of local area and/or wide area networks, using wired and/or wireless communication systems.

In one embodiment, the network 650 uses standard communications technologies and protocols. Thus, the network 650 can include links using technologies such as Ethernet, 802.11, worldwide interoperability for microwave access (WiMAX), 3G, 4G, CDMA, GSM, LTE, digital subscriber line (DSL), etc. Similarly, the networking protocols used on the network 650 can include multiprotocol label switching (MPLS), transmission control protocol/Internet protocol (TCP/IP), User Datagram Protocol (UDP), hypertext transport protocol (HTTP), simple mail transfer protocol (SMTP), file transfer protocol (FTP), and the like. The data exchanged over the network 650 can be represented using technologies and/or formats including hypertext markup language (HTML) and extensible markup language (XML). In addition, all or some links can be encrypted using conventional encryption technologies such as secure sockets layer (SSL), transport layer security (TLS), and Internet Protocol security (IPsec).

In one embodiment, the user device 610 may display content from the external system 620 and/or from the social networking system 630 by processing a markup language document 614 received from the external system 620 and from the social networking system 630 using a browser application 612. The markup language document 614 identifies content and one or more instructions describing formatting or presentation of the content. By executing the instructions included in the markup language document 614, the browser application 612 displays the identified content using the format or presentation described by the markup language document 614. For example, the markup language document 614 includes instructions for generating and displaying a web page having multiple frames that include text and/or image data retrieved from the external system 620 and the social networking system 630. In various embodiments, the markup language document 614 comprises a data file including extensible markup language (XML) data, extensible hypertext markup language (XHTML) data, or other markup language data. Additionally, the markup language document 614 may include JavaScript Object Notation (JSON) data, JSON with padding (JSONP), and JavaScript data to facilitate data-interchange between the external system 620 and the user device 610. The browser application 612 on the user device 610 may use a JavaScript compiler to decode the markup language document 614.

The markup language document 614 may also include, or link to, applications or application frameworks such as FLASH™ or Unity™ applications, the Silverlight™ application framework, etc.

In one embodiment, the user device 610 also includes one or more cookies 616 including data indicating whether a user of the user device 610 is logged into the social networking system 630, which may enable modification of the data communicated from the social networking system 630 to the user device 610.

The external system 620 includes one or more web servers that include one or more web pages 622a, 622b, which are communicated to the user device 610 using the network 650. The external system 620 is separate from the social networking system 630. For example, the external system 620 is associated with a first domain, while the social networking system 630 is associated with a separate social networking domain. Web pages 622a, 622b, included in the external system 620, comprise markup language documents 614 identifying content and including instructions specifying formatting or presentation of the identified content. As discussed previously, it should be appreciated that there can be many variations or other possibilities.

The social networking system 630 includes one or more computing devices for a social network, including a plurality of users, and providing users of the social network with the ability to communicate and interact with other users of the social network. In some instances, the social network can be represented by a graph, i.e., a data structure including edges and nodes. Other data structures can also be used to represent the social network, including but not limited to databases, objects, classes, meta elements, files, or any other data structure. The social networking system 630 may be administered, managed, or controlled by an operator. The operator of the social networking system 630 may be a human being, an automated application, or a series of applications for managing content, regulating policies, and collecting usage metrics within the social networking system 630. Any type of operator may be used.

Users may join the social networking system 630 and then add connections to any number of other users of the social networking system 630 to whom they desire to be connected. As used herein, the term "friend" refers to any other user of the social networking system 630 to whom a user has formed a connection, association, or relationship via the social networking system 630. For example, in an embodiment, if users in the social networking system 630 are represented as nodes in the social graph, the term "friend" can refer to an edge formed between and directly connecting two user nodes.

Connections may be added explicitly by a user or may be automatically created by the social networking system 630 based on common characteristics of the users (e.g., users who are alumni of the same educational institution). For example, a first user specifically selects a particular other user to be a friend. Connections in the social networking system 630 are usually in both directions, but need not be, so the terms "user" and "friend" depend on the frame of reference. Connections between users of the social networking system 630 are usually bilateral ("two-way"), or "mutual," but connections may also be unilateral, or "one-way." For example, if Bob and Joe are both users of the social networking system 630 and connected to each other, Bob and Joe are each other's connections. If, on the other hand, Bob wishes to connect to Joe to view data communicated to the social networking system 630 by Joe, but Joe does not wish to form a mutual connection, a unilateral connection may be established. The connection between users may be a direct connection; however, some embodiments of the social networking system 630 allow the connection to be indirect via one or more levels of connections or degrees of separation.

In addition to establishing and maintaining connections between users and allowing interactions between users, the social networking system 630 provides users with the ability to take actions on various types of items supported by the social networking system 630. These items may include groups or networks (i.e., social networks of people, entities, and concepts) to which users of the social networking system 630 may belong, events or calendar entries in which a user might be interested, computer-based applications that a user may use via the social networking system 630, transactions that allow users to buy or sell items via services provided by or through the social networking system 630, and interactions with advertisements that a user may perform on or off the social networking system 630. These are just a few examples of the items upon which a user may act on the social networking system 630, and many others are possible. A user may interact with anything that is capable of being represented in the social networking system 630 or in the external system 620, separate from the social networking system 630, or coupled to the social networking system 630 via the network 650.

The social networking system 630 is also capable of linking a variety of entities. For example, the social networking system 630 enables users to interact with each other as well as external systems 620 or other entities through an API, a web service, or other communication channels. The social networking system 630 generates and maintains the "social graph" comprising a plurality of nodes interconnected by a plurality of edges. Each node in the social graph may represent an entity that can act on another node and/or that can be acted on by another node. The social graph may include various types of nodes. Examples of types of nodes include users, non-person entities, content items, web pages, groups, activities, messages, concepts, and any other things that can be represented by an object in the social networking system 630. An edge between two nodes in the social graph may represent a particular kind of connection, or association, between the two nodes, which may result from node relationships or from an action that was performed by one of the nodes on the other node. In some cases, the edges between nodes can be weighted. The weight of an edge can represent an attribute associated with the edge, such as a strength of the connection or association between nodes. Different types of edges can be provided with different weights. For example, an edge created when one user "likes" another user may be given one weight, while an edge created when a user befriends another user may be given a different weight.

As an example, when a first user identifies a second user as a friend, an edge in the social graph is generated connecting a node representing the first user and a second node representing the second user. As various nodes relate or interact with each other, the social networking system 630 modifies edges connecting the various nodes to reflect the relationships and interactions.

The social networking system 630 also includes user-generated content, which enhances a user's interactions with the social networking system 630. User-generated content may include anything a user can add, upload, send, or "post" to the social networking system 630. For example, a user communicates posts to the social networking system 630 from a user device 610. Posts may include data such as status updates or other textual data, location information, images such as photos, videos, links, music or other similar data and/or media. Content may also be added to the social networking system 630 by a third party. Content "items" are represented as objects in the social networking system 630. In this way, users of the social networking system 630 are encouraged to communicate with each other by posting text and content items of various types of media through various communication channels. Such communication increases the interaction of users with each other and increases the frequency with which users interact with the social networking system 630.

The social networking system 630 includes a web server 632, an API request server 634, a user profile store 636, a connection store 638, an action logger 640, an activity log 642, and an authorization server 644. In an embodiment of the invention, the social networking system 630 may include additional, fewer, or different components for various applications. Other components, such as network interfaces, security mechanisms, load balancers, failover servers, management and network operations consoles, and the like are not shown so as to not obscure the details of the system.

The user profile store 636 maintains information about user accounts, including biographic, demographic, and other types of descriptive information, such as work experience, educational history, hobbies or preferences, location, and the like that has been declared by users or inferred by the social networking system 630. This information is stored in the user profile store 636 such that each user is uniquely identified. The social networking system 630 also stores data describing one or more connections between different users in the connection store 638. The connection information may indicate users who have similar or common work experience, group memberships, hobbies, or educational history. Additionally, the social networking system 630 includes user-defined connections between different users, allowing users to specify their relationships with other users. For example, user-defined connections allow users to generate relationships with other users that parallel the users' real-life relationships, such as friends, co-workers, partners, and so forth. Users may select from predefined types of connections, or define their own connection types as needed. Connections with other nodes in the social networking system 630, such as non-person entities, buckets, cluster centers, images, interests, pages, external systems, concepts, and the like are also stored in the connection store 638.

The social networking system 630 maintains data about objects with which a user may interact. To maintain this data, the user profile store 636 and the connection store 638 store instances of the corresponding type of objects maintained by the social networking system 630. Each object type has information fields that are suitable for storing information appropriate to the type of object. For example, the user profile store 636 contains data structures with fields suitable for describing a user's account and information related to a user's account. When a new object of a particular type is created, the social networking system 630 initializes a new data structure of the corresponding type, assigns a unique object identifier to it, and begins to add data to the object as needed. This might occur, for example, when a user becomes a user of the social networking system 630, the social networking system 630 generates a new instance of a user profile in the user profile store 636, assigns a unique identifier to the user account, and begins to populate the fields of the user account with information provided by the user.

The connection store 638 includes data structures suitable for describing a user's connections to other users, connections to external systems 620 or connections to other entities. The connection store 638 may also associate a connection type with a user's connections, which may be used in conjunction with the user's privacy setting to regulate access to information about the user. In an embodiment of the invention, the user profile store 636 and the connection store 638 may be implemented as a federated database.

Data stored in the connection store 638, the user profile store 636, and the activity log 642 enables the social networking system 630 to generate the social graph that uses nodes to identify various objects and edges connecting nodes to identify relationships between different objects. For example, if a first user establishes a connection with a second user in the social networking system 630, user accounts of the first user and the second user from the user profile store 636 may act as nodes in the social graph. The connection between the first user and the second user stored by the connection store 638 is an edge between the nodes associated with the first user and the second user. Continuing this example, the second user may then send the first user a message within the social networking system 630. The action of sending the message, which may be stored, is another edge between the two nodes in the social graph representing the first user and the second user. Additionally, the message itself may be identified and included in the social graph as another node connected to the nodes representing the first user and the second user.

In another example, a first user may tag a second user in an image that is maintained by the social networking system 630 (or, alternatively, in an image maintained by another system outside of the social networking system 630). The image may itself be represented as a node in the social networking system 630. This tagging action may create edges between the first user and the second user as well as create an edge between each of the users and the image, which is also a node in the social graph. In yet another example, if a user confirms attending an event, the user and the event are nodes obtained from the user profile store 636, where the attendance of the event is an edge between the nodes that may be retrieved from the activity log 642. By generating and maintaining the social graph, the social networking system 630 includes data describing many different types of objects and the interactions and connections among those objects, providing a rich source of socially relevant information.

The web server 632 links the social networking system 630 to one or more user devices 610 and/or one or more external systems 620 via the network 650. The web server 632 serves web pages, as well as other web-related content, such as Java, JavaScript, Flash, XML, and so forth. The web server 632 may include a mail server or other messaging functionality for receiving and routing messages between the social networking system 630 and one or more user devices 610. The messages can be instant messages, queued messages (e.g., email), text and SMS messages, or any other suitable messaging format.

The API request server 634 allows one or more external systems 620 and user devices 610 to call access information from the social networking system 630 by calling one or more API functions. The API request server 634 may also allow external systems 620 to send information to the social networking system 630 by calling APIs. The external system 620, in one embodiment, sends an API request to the social networking system 630 via the network 650, and the API request server 634 receives the API request. The API request server 634 processes the request by calling an API associated with the API request to generate an appropriate response, which the API request server 634 communicates to the external system 620 via the network 650. For example, responsive to an API request, the API request server 634 collects data associated with a user, such as the user's connections that have logged into the external system 620, and communicates the collected data to the external system 620. In another embodiment, the user device 610 communicates with the social networking system 630 via APIs in the same manner as external systems 620.

The action logger 640 is capable of receiving communications from the web server 632 about user actions on and/or off the social networking system 630. The action logger 640 populates the activity log 642 with information about user actions, enabling the social networking system 630 to discover various actions taken by its users within the social networking system 630 and outside of the social networking system 630. Any action that a particular user takes with respect to another node on the social networking system 630 may be associated with each user's account, through information maintained in the activity log 642 or in a similar database or other data repository. Examples of actions taken by a user within the social networking system 630 that are identified and stored may include, for example, adding a connection to another user, sending a message to another user, reading a message from another user, viewing content associated with another user, attending an event posted by another user, posting an image, attempting to post an image, or other actions interacting with another user or another object. When a user takes an action within the social networking system 630, the action is recorded in the activity log 642. In one embodiment, the social networking system 630 maintains the activity log 642 as a database of entries. When an action is taken within the social networking system 630, an entry for the action is added to the activity log 642. The activity log 642 may be referred to as an action log.

Additionally, user actions may be associated with concepts and actions that occur within an entity outside of the social networking system 630, such as an external system 620 that is separate from the social networking system 630. For example, the action logger 640 may receive data describing a user's interaction with an external system 620 from the web server 632. In this example, the external system 620 reports a user's interaction according to structured actions and objects in the social graph.

Other examples of actions where a user interacts with an external system 620 include a user expressing an interest in an external system 620 or another entity, a user posting a comment to the social networking system 630 that discusses an external system 620 or a web page 622a within the external system 620, a user posting to the social networking system 630 a Uniform Resource Locator (URL) or other identifier associated with an external system 620, a user attending an event associated with an external system 620, or any other action by a user that is related to an external system 620. Thus, the activity log 642 may include actions describing interactions between a user of the social networking system 630 and an external system 620 that is separate from the social networking system 630.

The authorization server 644 enforces one or more privacy settings of the users of the social networking system 630. A privacy setting of a user determines how particular information associated with a user can be shared. The privacy setting comprises the specification of particular information associated with a user and the specification of the entity or entities with whom the information can be shared. Examples of entities with which information can be shared may include other users, applications, external systems 620, or any entity that can potentially access the information. The information that can be shared by a user comprises user account information, such as profile photos, phone numbers associated with the user, user's connections, actions taken by the user such as adding a connection, changing user profile information, and the like.

The privacy setting specification may be provided at different levels of granularity. For example, the privacy setting may identify specific information to be shared with other users; the privacy setting identifies a work phone number or a specific set of related information, such as, personal information including profile photo, home phone number, and status. Alternatively, the privacy setting may apply to all the information associated with the user. The specification of the set of entities that can access particular information can also be specified at various levels of granularity. Various sets of entities with which information can be shared may include, for example, all friends of the user, all friends of friends, all applications, or all external systems 620. One embodiment allows the specification of the set of entities to comprise an enumeration of entities. For example, the user may provide a list of external systems 620 that are allowed to access certain information. Another embodiment allows the specification to comprise a set of entities along with exceptions that are not allowed to access the information. For example, a user may allow all external systems 620 to access the user's work information, but specify a list of external systems 620 that are not allowed to access the work information. Certain embodiments call the list of exceptions that are not allowed to access certain information a "block list". External systems 620 belonging to a block list specified by a user are blocked from accessing the information specified in the privacy setting. Various combinations of granularity of specification of information, and granularity of specification of entities, with which information is shared are possible. For example, all personal information may be shared with friends whereas all work information may be shared with friends of friends.

The authorization server 644 contains logic to determine if certain information associated with a user can be accessed by a user's friends, external systems 620, and/or other applications and entities. The external system 620 may need authorization from the authorization server 644 to access the user's more private and sensitive information, such as the user's work phone number. Based on the user's privacy settings, the authorization server 644 determines if another user, the external system 620, an application, or another entity is allowed to access information associated with the user, including information about actions taken by the user.

In some embodiments, the social networking system 630 can include a content provider module 646. The content provider module 646 can, for example, be implemented as the content provider module 102 of FIGURE 1. As discussed previously, it should be appreciated that there can be many variations or other possibilities.

### HARDWARE IMPLEMENTATION

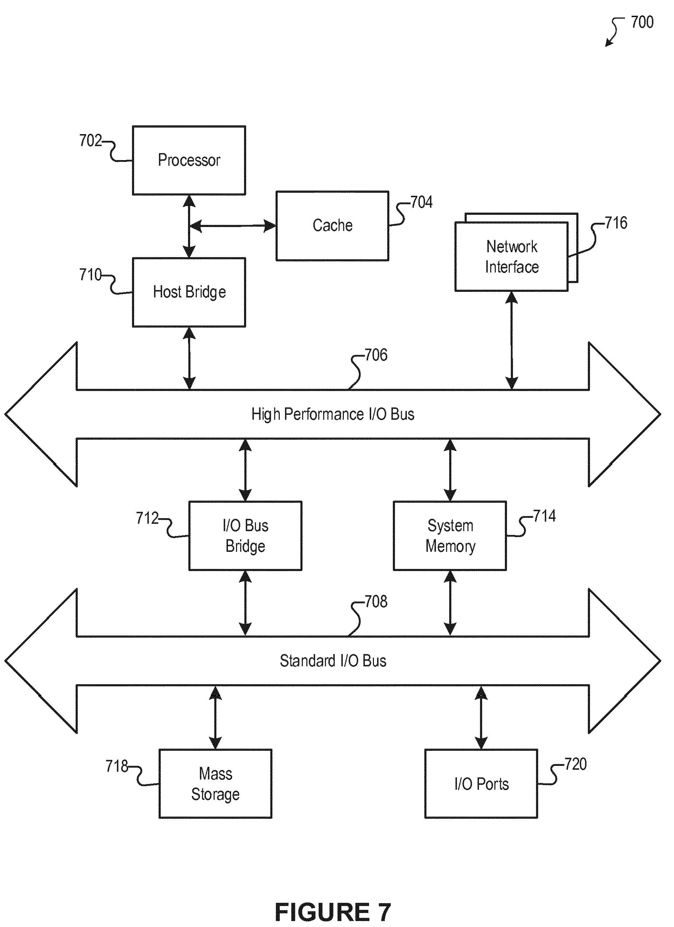

The foregoing processes and features can be implemented by a wide variety of machine and computer system architectures and in a wide variety of network and computing environments. FIGURE 7 illustrates an example of a computer system 700 that may be used to implement one or more of the embodiments described herein in accordance with an embodiment of the invention. The computer system 700 includes sets of instructions for causing the computer system 700 to perform the processes and features discussed herein. The computer system 700 may be connected (e.g., networked) to other machines. In a networked deployment, the computer system 700 may operate in the capacity of a server machine or a client machine in a client-server network environment, or as a peer machine in a peer-to-peer (or distributed) network environment. In an embodiment of the invention, the computer system 700 may be the social networking system 630, the user device 610, and the external system 720, or a component thereof. In an embodiment of the invention, the computer system 700 may be one server among many that constitutes all or part of the social networking system 630.

The computer system 700 includes a processor 702, a cache 704, and one or more executable modules and drivers, stored on a computer-readable medium, directed to the processes and features described herein. Additionally, the computer system 700 includes a high performance input/output (I/O) bus 706 and a standard I/O bus 708. A host bridge 710 couples processor 702 to high performance I/O bus 706, whereas I/O bus bridge 712 couples the two buses 706 and 708 to each other. A system memory 714 and one or more network interfaces 716 couple to high performance I/O bus 706. The computer system 700 may further include video memory and a display device coupled to the video memory (not shown). Mass storage 718 and I/O ports 720 couple to the standard I/O bus 708. The computer system 700 may optionally include a keyboard and pointing device, a display device, or other input/output devices (not shown) coupled to the standard I/O bus 708. Collectively, these elements are intended to represent a broad category of computer hardware systems, including but not limited to computer systems based on the x86-compatible processors manufactured by Intel Corporation of Santa Clara, California, and the x86compatible processors manufactured by Advanced Micro Devices (AMD), Inc., of Sunnyvale, California, as well as any other suitable processor.

An operating system manages and controls the operation of the computer system 700, including the input and output of data to and from software applications (not shown). The operating system provides an interface between the software applications being executed on the system and the hardware components of the system. Any suitable operating system may be used, such as the LINUX Operating System, the Apple Macintosh Operating System, available from Apple Computer Inc. of Cupertino, California, UNIX operating systems, Microsoft® Windows® operating systems, BSD operating systems, and the like. Other implementations are possible.

The elements of the computer system 700 are described in greater detail below. In particular, the network interface 716 provides communication between the computer system 700 and any of a wide range of networks, such as an Ethernet (e.g., IEEE 802.3) network, a backplane, etc. The mass storage 718 provides permanent storage for the data and programming instructions to perform the above-described processes and features implemented by the respective computing systems identified above, whereas the system memory 714 (e.g., DRAM) provides temporary storage for the data and programming instructions when executed by the processor 702. The I/O ports 720 may be one or more serial and/or parallel communication ports that provide communication between additional peripheral devices, which may be coupled to the computer system 700.

The computer system 700 may include a variety of system architectures, and various components of the computer system 700 may be rearranged. For example, the cache 704 may be on-chip with processor 702. Alternatively, the cache 704 and the processor 702 may be packed together as a "processor module", with processor 702 being referred to as the "processor core". Furthermore, certain embodiments of the invention may neither require nor include all of the above components. For example, peripheral devices coupled to the standard I/O bus 708 may couple to the high performance I/O bus 706. In addition, in some embodiments, only a single bus may exist, with the components of the computer system 700 being coupled to the single bus. Moreover, the computer system 700 may include additional components, such as additional processors, storage devices, or memories.

In general, the processes and features described herein may be implemented as part of an operating system or a specific application, component, program, object, module, or series of instructions referred to as "programs". For example, one or more programs may be used to execute specific processes described herein. The programs typically comprise one or more instructions in various memory and storage devices in the computer system 700 that, when read and executed by one or more processors, cause the computer system 700 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 700, individually or collectively in a distributed computing environment. The foregoing modules may be realized by hardware, executable modules stored on a computer-readable medium (or machinereadable medium), or a combination of both. For example, the modules may comprise a plurality or series of instructions to be executed by a processor in a hardware system, such as the processor 702. Initially, the series of instructions may be stored on a storage device, such as the mass storage 718. However, the series of instructions can be stored on any suitable computer readable storage medium. Furthermore, the series of instructions need not be stored locally, and could be received from a remote storage device, such as a server on a network, via the network interface 716. The instructions are copied from the storage device, such as the mass storage 718, into the system memory 714 and then accessed and executed by the processor 702. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 700 to perform any one or more of the processes and features described herein.

For purposes of explanation, numerous specific details are set forth in order to provide a thorough understanding of the description. It will be apparent, however, to one skilled in the art that embodiments of the disclosure can be practiced without these specific details. In some instances, modules, structures, processes, features, and devices are shown in block diagram form in order to avoid obscuring the description. In other instances, functional block diagrams and flow diagrams are shown to represent data and logic flows. The components of block diagrams and flow diagrams (e.g., modules, blocks, structures, devices, features, etc.) may be variously combined, separated, removed, reordered, and replaced in a manner other than as expressly described and depicted herein.

Reference in this specification to "one embodiment", "an embodiment", "other embodiments", "one series of embodiments", "some embodiments", "various embodiments", or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments. Moreover, whether or not there is express reference to an "embodiment" or the like, various features are described, which may be variously combined and included in some embodiments, but also variously omitted in other embodiments. Similarly, various features are described that may be preferences or requirements for some embodiments, but not other embodiments.

The language used herein has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A computer-implemented method comprising:
determining, by a social networking system, that a first content item was provided for publication through the social networking system;
determining, by the social networking system, at least some portions of the first content item that match content included in a second content item, the second content item being accessible through the social networking system;
determining, by the social networking system, that the portions of the first content item include at least some copyrighted content from the second content item; and
providing, by the social networking system, at least one notification to a publisher of the second content item, wherein the notification indicates a potential copyright violation by a publisher of the first content item, and wherein the notification identifies at least some portions of the first content item that match copyrighted content in the second content item.

2. The computer-implemented method of claim 1, wherein determining at least some portions of the first content item that match content included in the second content item further comprises:
determining, by the social networking system, a set of candidate content items that each include at least one frame that matches a frame in the first content item, the set of candidate content items including the second content item; and
determining, by the social networking system, at least one contiguous sequence of frames in the first content item that match a contiguous sequence of frames in the second content item.

3. The computer-implemented method of claim 2, wherein determining the set of candidate content items that each include at least one frame that matches a frame in the first content item further comprises:
determining, by the social networking system, a fingerprint for a frame in the first content item;
determining, by the social networking system, one or more fingerprints that are associated with the fingerprint for the frame based at least in part on a search index that identifies, for a given frame, one or more frames in other content items that match the given frame, wherein each fingerprint in the search index references at least one content item that is available through the social networking system; and
determining, by the social networking system, the set of candidate content items based at least in part on the content items that are referenced by the one or more fingerprints; and/or
preferably wherein determining at least one contiguous sequence of frames in the first content item that match a contiguous sequence of frames in the second content item further comprises:
determining, by the social networking system, that at least one first frame in the first content item matches at least one first frame in the second content item; and
determining, by the social networking system, that at least one second frame in the first content item matches at least one second frame in the second content item,
wherein the first frame in the first content item is adjacent to the second frame in the first content item, and wherein the first frame in the second content item is adjacent to the second frame in the second content item;
preferably wherein determining that at least one first frame in the first content item matches at least one first frame in the second content item further comprises:
determining, by the social networking system, that a Hamming distance between a fingerprint of the first frame in the first content item and a fingerprint of the first frame in the second content item satisfies a threshold.

4. The computer-implemented method of claim 2, wherein determining the set of candidate content items that each include at least one frame that matches a frame in the first content item further comprises:
determining, by the social networking system, a ranking of the set of candidate content items, the ranking being based at least in part on a number of frames in at least a segment of a candidate content item that match frames in the first content item; and
removing, by the social networking system, candidate content items in the set of candidate content items that do not match at least a threshold number of frames in the first content item.

5. The computer-implemented method of any of claims 1 to 4, wherein determining that the portions of the first content item include at least some copyrighted content from the second content item further comprises:
determining, by the social networking system, that a publisher of the second content item has identified one or more portions of the second content item as copyrighted content.

6. The computer-implemented method of any of claims 1 to 5, wherein providing the at least one notification to the publisher of the second content item further comprises:
providing, by the social networking system, an interface for viewing at least the first content item and the second content item;
preferably wherein the interface includes at least one option to playback respective portions of both the first content item and the second content item that were determined to match, wherein the playback of the respective portions is performed synchronously; and/or
preferably wherein the interface provides information indicating a total amount of playback time of the first content item that includes content that matches content from the second content item.

7. A system comprising:
at least one processor; and
a memory storing instructions that, when executed by the at least one processor,
cause the system to perform:
determining that a first content item was provided for publication through the social networking system;
determining at least some portions of the first content item that match content included in a second content item, the second content item being accessible through the social networking system;
determining that the portions of the first content item include at least some copyrighted content from the second content item; and
providing at least one notification to a publisher of the second content item, wherein the notification indicates a potential copyright violation by a publisher of the first content item, and wherein the notification identifies at least some portions of the first content item that match copyrighted content in the second content item.

8. The system of claim 7, wherein determining at least some portions of the first content item that match content included in the second content item further causes the system to perform:
determining a set of candidate content items that each include at least one frame that matches a frame in the first content item, the set of candidate content items including the second content item; and
determining at least one contiguous sequence of frames in the first content item that match a contiguous sequence of frames in the second content item; and/or
preferably wherein determining the set of candidate content items that each include at least one frame that matches a frame in the first content item further causes the system to perform:
determining a fingerprint for a frame in the first content item;
determining one or more fingerprints that are associated with the fingerprint for the frame based at least in part on a search index that identifies, for a given frame, one or more frames in other content items that match the given frame, wherein each fingerprint in the search index references at least one content item that is available through the social networking system; and
determining the set of candidate content items based at least in part on the content items that are referenced by the one or more fingerprints;
preferably wherein determining at least one contiguous sequence of frames in the first content item that match a contiguous sequence of frames in the second content item further causes the system to perform:
determining that at least one first frame in the first content item matches at least one first frame in the second content item; and
determining that at least one second frame in the first content item matches at least one second frame in the second content item, wherein the first frame in the first content item is adjacent to the second frame in the first content item, and wherein the first frame in the second content item is adjacent to the second frame in the second content item.

9. The system of claim 8, wherein determining that at least one first frame in the first content item matches at least one first frame in the second content item further causes the system to perform:
determining that a Hamming distance between a fingerprint of the first frame in the first content item and a fingerprint of the first frame in the second content item satisfies a threshold.

10. A non-transitory computer-readable storage medium including instructions that, when executed by at least one processor of a computing system, cause the computing system to perform a method comprising:
determining that a first content item was provided for publication through the social networking system;
determining at least some portions of the first content item that match content included in a second content item, the second content item being accessible through the social networking system;
determining that the portions of the first content item include at least some copyrighted content from the second content item; and
providing at least one notification to a publisher of the second content item, wherein the notification indicates a potential copyright violation by a publisher of the first content item, and wherein the notification identifies at least some portions of the first content item that match copyrighted content in the second content item.

11. The non-transitory computer-readable storage medium of claim 10, wherein determining at least some portions of the first content item that match content included in the second content item further causes the computing system to perform:
determining a set of candidate content items that each include at least one frame that matches a frame in the first content item, the set of candidate content items including the second content item; and
determining at least one contiguous sequence of frames in the first content item that match a contiguous sequence of frames in the second content item;
preferably wherein determining the set of candidate content items that each include at least one frame that matches a frame in the first content item further causes the computing system to perform:
determining a fingerprint for a frame in the first content item;
determining one or more fingerprints that are associated with the fingerprint for the frame based at least in part on a search index that identifies, for a given frame, one or more frames in other content items that match the given frame, wherein each fingerprint in the search index references at least one content item that is available through the social networking system; and
determining the set of candidate content items based at least in part on the content items that are referenced by the one or more fingerprints; and/or
preferably wherein determining at least one contiguous sequence of frames in the first content item that match a contiguous sequence of frames in the second content item further causes the computing system to perform:
determining that at least one first frame in the first content item matches at least one first frame in the second content item; and
determining that at least one second frame in the first content item matches at least one second frame in the second content item, wherein the first frame in the first content item is adjacent to the second frame in the first content item, and wherein the first frame in the second content item is adjacent to the second frame in the second content item.

12. The non-transitory computer-readable storage medium of claim 11, wherein determining that at least one first frame in the first content item matches at least one first frame in the second content item further causes the computing system to perform:
determining that a Hamming distance between a fingerprint of the first frame in the first content item and a fingerprint of the first frame in the second content item satisfies a threshold.
